# EUROPEAN PATENT APPLICATION

(11) **EP 4 174 133 A1**
(43) Date of publication of application: **03.05.2023**
(21) Application number: 21833707.9
(22) Date of filing: 28.06.2021
(51) Int. Cl.: C08L 67/00, D01F 6/92, C08K 3/34, C08G 63/60

(54) **RESIN COMPOSITION AND RESIN MOLDED ARTICLE COMPRISING SAID RESIN COMPOSITION**

(30) Priority: 30.06.2020 JP 2020113128
(71) Applicant: ENEOS Corporation, Chiyoda-ku Tokyo 100-8162 (JP)
(72) Inventor: UMEMURA Yuji, Tokyo 100-8162 (JP); ONO Nozomi, Tokyo 100-8162 (JP)
(74) Representative: Müller-Boré & Partner Patentanwälte PartG mbB
(86) International application number: PCT/JP2021/024294
(87) International publication number: WO 2022/004630

(57) **Abstract**

[Object] To provide a resin composition which provides a resin molded article low in dielectric tangent and excellent in mechanical strength performance such as toughness.

[Solution] The resin composition according to the present invention includes a liquid crystal polyester resin (A) and a filler (B), in which
the liquid crystal polyester resin (A) contains a structural unit (I) derived from 6-hydroxy-2-naphthoic acid, a structural unit (II) derived from an aromatic diol compound, and a structural unit (III) derived from an aromatic dicarboxylic acid compound, and the structural unit (III) contains a structural unit (IIIA) derived from terephthalic acid and/or a structural unit (IIIB) derived from 2,6-naphthalenedicarboxylic acid,
a compositional ratio (% by mol) of the structural units satisfies the following conditions:
40% by mol ≤ structural unit (I) ≤ 75% by mol
12% by mol ≤ structural unit (II) ≤ 30% by mol
12% by mol ≤ structural unit (III) ≤ 30% by mol,

the filler (B) is at least one selected from the group consisting of silica, mica, and talc, and
the resin composition has a dielectric tangent of 1.0 × 10⁻³ or less as measured by a cavity resonator perturbation method at a measurement frequency of 10 GHz.

## Description

### BACKGROUND OF THE INVENTION

### Field of the Invention

The present invention relates to a resin composition which provides a resin molded article low in dielectric tangent and excellent in mechanical strength performance such as toughness. Furthermore, the present invention relates to a resin molded article including the resin composition and an electrical/electronic component including the resin molded article.

### Background Art

In recent years, the amounts of information and communications have been rapidly increased increasingly and the frequencies of signals used have been further higher, and resins having lower dielectric tangents at frequencies in the gigahertz (GHz) band, frequencies of 10⁹ Hz or more, have been required. In view of such challenges, Patent Literature 1 has proposed a liquid crystalline aromatic polyester containing two or more structural units, a structural unit derived from p- or m-hydroxybenzoic acid and a structural unit derived from hydroxynaphthoic acid, as a liquid crystalline aromatic polyester exhibiting a low dielectric tangent in a high frequency band. Patent Literature 2 has proposed a polyester resin containing 1 to 6% of a structural unit derived from p-hydroxybenzoic acid, 40 to 60% of a structural unit derived from 6-hydroxy-2-naphthoic acid, 17.5 to 30% of a structural unit derived from an aromatic diol compound, and 17.5 to 30% of a structural unit derived from an aromatic dicarboxylic acid, as a wholly aromatic polyester. However, the present applicant has found that, even if the polyester resin proposed in Patent Literature 1 is used, no sufficient low dielectric tangent required in a high frequency band is exhibited. The applicant has also found again that, even if the polyester resin proposed in Patent Literature 2 is used, no sufficient low dielectric tangent required in a high frequency band is exhibited.

Liquid crystal polyester resins are excellent in heat resistance, thin moldability, and the like, and thus are widely used for surface mounted electronic components obtained by injection molding. Liquid crystal polyester resins are materials also low in dielectric loss and excellent in electrical characteristics, and thus there have been recently studied methods for molding aromatic liquid crystal polyesters into films according to T-die extrusion methods, inflation methods, solution casting methods, or the like.

Furthermore, if liquid crystal polyester resins are used to design devices or the like, it is common to undergo high-temperature heat processes like processing with solder, and thus sufficient heat resistance is required. The present applicant has found that the polyester resin proposed in Patent Literature 1 cannot satisfy both a sufficient low dielectric tangent demanded in a high frequency band including a measurement frequency of 10 GHz, and sufficient heat resistance. The present applicant has heretofore proposed a wholly aromatic liquid crystal polyester resin described below, which is a wholly aromatic liquid crystal polyester resin not only having a particularly low dielectric tangent, but also being excellent in balance between heat resistance and processability, by adopting specified structural units and modulating a specified compositional ratio of these units (see Patent Literature 3).

Additionally, procedures for developing materials having excellent characteristics by kneading or blending liquid crystal polyester resins with fillers and/or other resins are also known as material design methods other than design of monomers. For example, there has been proposed kneading of a hollow glass balloon filler having an air layer, with a liquid crystal polyester resin (see Patent Literature 4). Air has an extremely low permittivity of 1, and thus can be blended with the resin to result in a reduction in permittivity. However, hollow glass balloon significantly inhibits liquid crystallinity of the liquid crystal polyester resin, resulting in a remarkable increase in viscosity even by less kneading. Thus, remarkable deterioration in processability of a resin composition is caused and thus only a very small amount of about 10% by mass or more of the entire resin composition can be kneaded in practice. An additional problem is that a material after kneading is hollow and thus brittle and is deteriorated in mechanical strength and heat resistance.

Furthermore, there is also known kneading or blending of ceramics such as magnesium oxide or boron nitride with liquid crystal polyester resins, as a procedure for reduction in dielectric tangent. However, ceramic materials, while have a low dielectric tangent in the order of 10⁻⁴ to 10⁻⁵, have a permittivity of 8 or more or sometimes have a very high permittivity of about 80, and materials kneaded are reversely increased in permittivity.

Fluorine-based materials have been conventionally known as materials extremely low in both dielectric tangent and permittivity. In particular, polytetrafluoroethylene resins (PTFEs) are known to have excellent electrical characteristics, a permittivity of about 2 and a dielectric tangent in the order of 10⁻⁴. On the other hand, PTFEs are known to be extremely high in viscosity in the state of being molten, and cannot be melt processed, for example, injection molded or melt extruded. Only one processing method is cut processing which involves cutting block objects compressed, and such a method cannot provide any high productivity and any fine processing, unlike injection molding. Fluorine materials such as tetrafluoroethylene-perfluoroalkyl vinyl ether copolymer resins (PFAs) changed in structures of PTFEs have been developed for methods for improving processability of PTFEs. Such materials, while are reduced in viscosity as compared with PTFEs and can be processed into films, cannot keep a low dielectric tangent at a level which is achieved by PTFEs. Thus, processability is enhanced at the expense of electrical properties, and there is a need for a material which can be reduced in dielectric tangent with melt viscosity appropriate for processing and heat resistance for retention of solder heat resistance or the like of a product being kept.

### Citation List

### Patent Literature

[Patent Literature 1] JP 2004-250620 A
[Patent Literature 2] JP 2002-179776 A
[Patent Literature 3] JP 6434195 B
[Patent Literature 4] JP 2004-27021 A

### SUMMARY OF THE INVENTION

### Technical Problem

The present inventors have then developed a resin composition including specified liquid crystal polyester resin and fluororesin in order to provide a resin molded article including a liquid crystal polyester resin having a low dielectric tangent. However, the present inventors have found that a resin composition including a fluororesin compounded, although has the effect of a low dielectric tangent, may be inferior in mechanical strength such as toughness.

### Solution to Problem

The present inventors have made intensive studies in order to solve the above problems, and as a result, have found again that the above problems can be solved by compounding at least one of silica, mica, and talc, as a filler, with a specified liquid crystal polyester resin. The present invention has been completed based on such a finding.

In other words, one aspect of the present invention provides
a resin composition including a liquid crystal polyester resin (A) and a filler (B), wherein
the liquid crystal polyester resin (A) contains a structural unit (I) derived from 6-hydroxy-2-naphthoic acid, a structural unit (II) derived from an aromatic diol compound, and a structural unit (III) derived from an aromatic dicarboxylic acid compound, and the structural unit (III) contains a structural unit (IIIA) derived from terephthalic acid and/or a structural unit (IIIB) derived from 2,6-naphthalenedicarboxylic acid,
a compositional ratio (% by mol) of the structural units satisfies the following conditions:
   40% by mol ≤ structural unit (I) ≤ 75% by mol
   12% by mol ≤ structural unit (II) ≤ 30% by mol
   12% by mol ≤ structural unit (III) ≤ 30% by mol,
the filler (B) is at least one selected from the group consisting of silica, mica, and talc, and
the resin composition has a dielectric tangent of 1.0 × 10⁻³ or less as measured by a cavity resonator perturbation method at a measurement frequency of 10 GHz.

In an aspect of the present invention, an amount of compounding of the liquid crystal polyester resin (A) and an amount of compounding of the filler (B) are preferably respectively 50 parts by mass or more and 99 parts by mass or more and 1 part by mass or more and 50 parts by mass or more based on 100 parts by mass in total of the liquid crystal polyester resin (A) and the filler (B).

In an aspect of the present invention, the liquid crystal polyester resin (A) preferably has a melting point of 300°C or more.

In an aspect of the present invention, the liquid crystal polyester resin (A) preferably has a melt viscosity of 5 Pa·s or more and 120 Pa·s or less at its melting point + 20°C and a shear speed of 1000 s⁻¹.

In an aspect of the present invention, the structural unit (II) is preferably represented by the following formula: 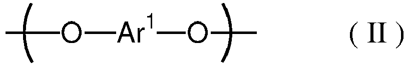 wherein Ar¹ is selected from the group consisting of phenyl, biphenyl, naphthyl, anthryl and phenanthryl each optionally having a substituent.

In an aspect of the present invention, preferably, the structural unit (III) contains a structural unit (IIIA) derived from terephthalic acid and contains a structural unit (IIIB) derived from 2,6-naphthalenedicarboxylic acid, and the compositional ratio of the structural unit (IIIA) and the structural unit (IIIB) satisfies the following conditions:
3% by mol ≤ structural unit (IIIA) ≤ 28% by mol
2% by mol ≤ structural unit (IIIB) ≤ 9% by mol.

Another aspect of the present invention provides a resin molded article including the resin composition.

In another aspect of the present invention, the resin molded article preferably has a film shape.

In another aspect of the present invention, the resin molded article is preferably fibrous.

In another aspect of the present invention, the resin molded article is preferably an injection molded article.

Still another aspect of the present invention provides an electrical/electronic component including the resin molded article.

### Advantageous Effects of Invention

The present invention can provide a resin composition which provides a resin molded article low in dielectric tangent and excellent in mechanical strength such as toughness. Furthermore, the present invention can also provide a resin molded article including the resin composition and an electrical/electronic component including the resin molded article.

### DETAILED DESCRIPTION OF THE INVENTION

### [Resin composition]

The resin composition according to the present invention includes the following liquid crystal polyester resin (A) and filler (B). Such a resin composition can be used to thereby provide a resin molded article low in dielectric tangent and excellent in mechanical strength such as toughness. Furthermore, the resin composition according to the present invention can also have heat resistance comparable with that of a liquid crystal polyester resin.

The resin composition has a dielectric tangent of 1.0 × 10⁻³ or less, preferably 0.95 × 10⁻³ or less, more preferably 0.9 × 10⁻³ or less, as measured by a cavity resonator perturbation method at 10 GHz.

The resin composition preferably has a relative permittivity of 3.8 or less, more preferably 3.7 or less, further preferably 3.6 or less, still more preferably 3.5 or less, as measured by a cavity resonator perturbation method at 10 GHz.

The dielectric tangent and relative permittivity values are each an average value of those in a MD direction and a TD direction of an injection molded article of the resin composition. The injection molded article is a test piece obtained by cutting to a size of 60 mm × 3 mm (width) from a flat plate of 60 mm × 60 mm × 0.8 mm (thickness).

The dielectric tangent at 10 GHz of the resin composition can be herein measured with a Network analyzer from Anritsu and a resonator from AET, Inc., by a cavity resonator perturbation method. Unless particularly indicated, the value of the dielectric tangent is a measurement value at 23°C under an air atmosphere.

Hereinafter, each component included in the resin composition is described.

### (Liquid crystal polyester resin (A))

The liquid crystal polyester resin (A) for use in the resin composition of the present invention contains a structural unit (I) derived from 6-hydroxy-2-naphthoic acid, a structural unit (II) derived from a diol compound, and a structural unit (III) derived from dicarboxylic acid. Hereinafter, each structural unit contained in the liquid crystal polyester resin (A) is described.

### (Structural unit (I) derived from 6-hydroxy-2-naphthoic acid)

The liquid crystal polyester resin (A) contains a structural unit (I) derived from 6-hydroxy-2-naphthoic acid, represented by the following formula (I).

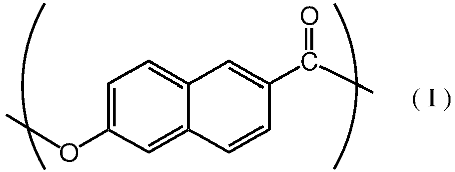

Examples of a monomer imparting the structural unit (I) include 6-hydroxy-2-naphthoic acid (HNA, the following formula (1)), and acetylated products, ester derivatives, and acid halides thereof.

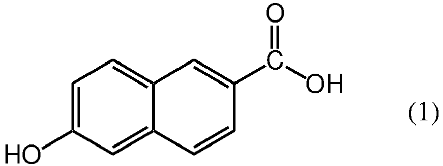

The lower limit value of the compositional ratio (% by mol) of the structural unit (I) in the liquid crystal polyester resin (A) is 40% by mol or more, preferably 45% by mol or more, more preferably 50% by mol or more, and the upper limit value thereof is 75% by mol or less, preferably 70% by mol or less, more preferably 65% by mol or less, from the viewpoints of a reduction in dielectric tangent and an enhancement in melting point of the liquid crystal polyester resin (A).

### (Structural unit (II) derived from diol compound)

The unit (II) constituting the liquid crystal polyester resin (A) is a structural unit derived from a diol compound, and is preferably a structural unit derived from an aromatic diol compound, represented by the following formula (II). Only one kind of the structural unit (II), or two or more kinds thereof may be contained. 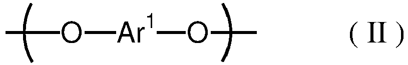 In the formula, Ar¹ is selected from the group consisting of a phenyl group, a biphenyl group, a 4,4'-isopropylidenediphenyl group, a naphthyl group, an anthryl group and a phenanthryl group each optionally having a substituent. In particular, a phenyl group and a biphenyl group are more preferable. Examples of the substituent include hydrogen, an alkyl group, an alkoxy group, and fluorine. The number of carbon atoms in the alkyl group is preferably 1 to 10, more preferably 1 to 5. A linear alkyl group or a branched alkyl group may be adopted. The number of carbon atoms in the alkoxy group is preferably 1 to 10, more preferably 1 to 5.

Examples of a monomer imparting the structural unit (II) include 4,4'-dihydroxybiphenyl (BP, the following formula (2)), hydroquinone (HQ, the following formula (3)), methylhydroquinone (MeHQ, the following formula (4)), 4,4'-isopropylidenediphenol (BisPA, the following formula (5)), and acylated products, ester derivatives, and acid halides thereof. In particular, 4,4'-dihydroxybiphenyl (BP), and acylated products, ester derivatives and acid halides thereof are preferably used.

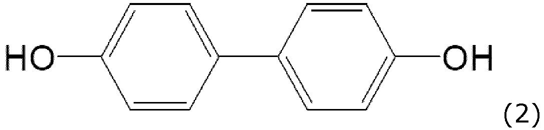

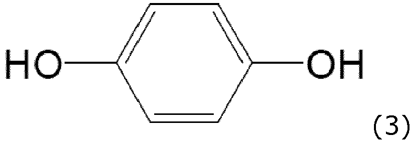

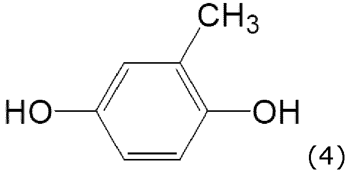

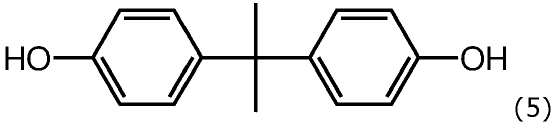

The lower limit value of the compositional ratio (% by mol) of the structural unit (II) to the total structural unit of the polyester resin is 12% by mol or more, preferably 12.5% by mol or more, more preferably 15% by mol or more, further preferably 17.5% by mol or more, and the upper limit value thereof is 30% by mol or less, preferably 27% by mol or less, more preferably 25% by mol or less, further preferably 23% by mol or less. When the structural unit (II) is contained in combination of two or more kinds thereof, the total molar ratio may fall within the compositional ratio range.

### (Structural unit (III) derived from aromatic dicarboxylic acid)

The unit (III) constituting the liquid crystal polyester resin (A) contains a structural unit (IIIA) derived from terephthalic acid, represented by the following formula (IIIA), and/or a structural unit (IIIB) derived from 2,6-naphthalenedicarboxylic acid, represented by the following formula (IIIB), and preferably contains both the structural unit (IIIA) and the structural unit (IIIB).

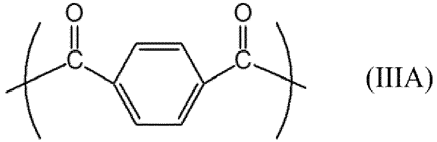

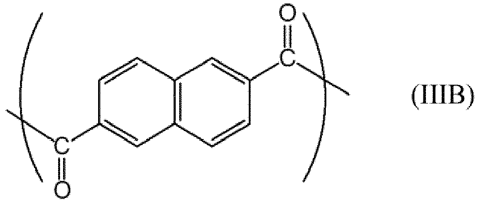

Examples of a monomer imparting the structural unit (IIIA) include terephthalic acid (TPA, the following formula (6)), and ester derivatives and acid halides thereof. TPA and derivatives thereof are widely used as raw materials for general purpose plastics and are classified to those having the lowest cost price, among aromatic dicarboxylic acid compounds, and thus an increase in compositional ratio of the structural unit (IIIA) in the structural unit (III) results in an enhancement in cost advantage of a resin product.

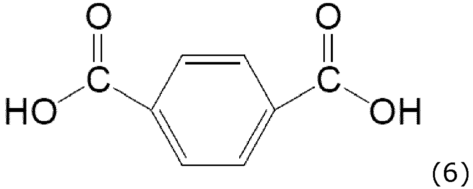

Examples of a monomer imparting the structural unit (IIIB) include 2,6-naphthalenedicarboxylic acid (NADA, the following formula (7)), and ester derivatives and acid halides thereof. NADA is higher in cost price than TPA and the like, and thus a decrease in compositional ratio of the structural unit (IIIB) in the structural unit (III) results in an enhancement in cost advantage of a resin product.

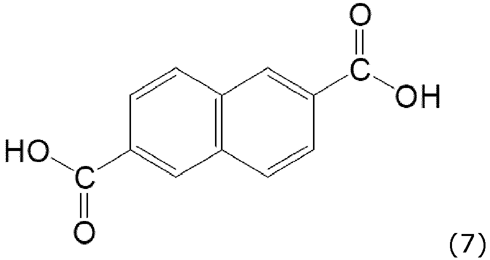

The lower limit value of the compositional ratio (% by mol) of the structural unit (III) to the total structural unit of the polyester resin (A) is 12% by mol or more, preferably 12.5% by mol or more, more preferably 15% by mol or more, further preferably 17.5% by mol or more, and the upper limit value thereof is 30% by mol or less, preferably 27% by mol or less, more preferably 25% by mol or less, further preferably 23% by mol or less.

The lower limit value of the compositional ratio (% by mol) of the structural unit (IIIA) to the total structural unit of the polyester resin (A) is preferably 3% by mol, more preferably 6% by mol or more, further preferably 8% by mol or more, still more preferably 11% by mol or more, and the upper limit value thereof is preferably 28% by mol or less, more preferably 25% by mol or less, further preferably 23% by mol or less, still more preferably 21% by mol or less.

The lower limit value of the compositional ratio (% by mol) of the structural unit (IIIB) to the total structural unit of the polyester resin (A) is preferably 2% by mol or more, more preferably 3% by mol or more, further preferably 4% by mol or more, and the upper limit value thereof is preferably 9% by mol or less, more preferably 8% by mol or less. The compositional ratio of the structural unit (II) and the compositional ratio of the structural unit (III) (the total compositional ratio of the structural unit (IIIA) and the structural unit (IIIB)) are substantially equivalent to each other ((structural unit (II) ≈ structural unit (III)).

Examples of particularly preferable compounding of the polyester resin (A) in the present invention include the following:
45% by mol ≤ structural unit (I) derived from 6-hydroxy-2-naphthoic acid ≤ 75% by mol
12% by mol ≤ structural unit (II) derived from aromatic diol compound ≤ 27.5% by mol
3% by mol ≤ structural unit structural unit (IIIA) derived from terephthalic acid ≤ 25% by mol
2% by mol ≤ structural unit (IIIB) derived from 2,6-naphthalenedicarboxylic acid ≤ 9% by mol.

If each of the structural units is contained in the range relative to the total structural unit of the polyester resin (A), a polyester resin low in dielectric tangent can be obtained.

The liquid crystallinity of the liquid crystal polyester resin (A) can be confirmed with a polarization microscope (trade name: BH-2) manufactured by OLYMPUS CORPORATION, equipped with a hot stage for microscopes (trade name: FP82HT) manufactured by METTLER TOLEDO, by heating and melting the liquid crystal polyester resin (A) on a microscope heating stage and then observing the presence of optical anisotropy.

The lower limit value of the melting point of the liquid crystal polyester resin (A) is preferably 300°C or more, more preferably 305°C or more, further preferably 310°C or more. The upper limit value thereof is preferably 360°C or less, preferably 350°C or less, further preferably 340°C or less. The melting point of the liquid crystal polyester resin (A) can be set in the numerical range to not only allow for enhancements in processing stability of the resin composition including the liquid crystal polyester resin (A) falling within the scope of the present invention, specifically, stability of melt molding processability under application of shear and melt processing stability under application of no shear, but also allow heat resistance of a material of a molded article produced using the resin composition to be kept in a favorable range in terms of solder heat resistance.

The dielectric tangent of the liquid crystal polyester resin (A), as measured by a cavity resonator perturbation method at 10 GHz, is preferably 1.0 × 10⁻³ or less, preferably 0.9 × 10⁻³ or less, more preferably 0.8 × 10⁻³ or less, further preferably 0.7 × 10⁻³ or less. The dielectric tangent value is an average value of those in the TD direction and the MD direction in the in-plane direction of an injection molded article of the liquid crystal polyester resin (A). The injection molded article is a test piece obtained by cutting to a size of 60 mm × 3 mm width from a flat plate of 60 mm × 60 mm × 0.8 mm (thickness).

The lower limit value of the melt viscosity of the liquid crystal polyester resin (A), under conditions of a temperature corresponding to the melting point + 20°C or more of the liquid crystal polyester resin (A), and a shear speed of 1000 s⁻¹, is preferably 5 Pa·s or more, more preferably 10 Pa·s or more, further preferably 20 Pa·s or more from the viewpoint of melt molding processability, and the upper limit value thereof is preferably 120 Pa·s, more preferably 110 Pa·s, further preferably 100 Pa·s or less.

### (Method for producing liquid crystal polyester resin (A))

The liquid crystal polyester resin (A) can be produced by polymerizing monomers optionally imparting structural units (I) to (III), according to a conventionally known method. In one embodiment, the liquid crystal polyester resin (A) in the present invention can also be produced by two-stage polymerization where a prepolymer is produced by melt polymerization and further is subjected to solid phase polymerization.

The melt polymerization is preferably performed under acetic acid reflux, by combining the monomers optionally imparting the structural units (I) to (III) by predetermined compounding so that the total reaches 100% by mol, and allowing 1.05 to 1.15 molar equivalents of acetic anhydride to be present based on the total hydroxyl group in the monomers, from the viewpoint of efficiently providing the polyester compound in the present invention.

In the case of a polymerization reaction at two stages of the melt polymerization and subsequent solid phase polymerization, a method is preferably selected which is, for example, a method involving cooling and solidifying and then pulverizing the prepolymer obtained by the melt polymerization, to thereby provide a powdery or flaky prepolymer, and thereafter performing a known solid phase polymerization method, for example, a method of heat-treating such a prepolymer resin at a temperature ranging from 200 to 350°C under an atmosphere of an inert gas such as nitrogen or under vacuum for 1 to 30 hours. The solid phase polymerization may be performed with stirring or under still standing with no stirring.

A catalyst may or may not be used in the polymerization reaction. The catalyst used can be any conventionally known catalyst for polyester formation, and examples include metal salt catalysts such as magnesium acetate, stannous acetate, tetrabutyl titanate, lead acetate, sodium acetate, potassium acetate and antimony trioxide, and organic compound catalysts such as a nitrogen-containing heterocyclic compound such as N-methylimidazole. The amount of the catalyst used is not particularly limited, and is preferably 0.0001 to 0.1 parts by weight based on 100 parts by weight of the total monomer.

The polymerization reaction apparatus in the melt polymerization is not particularly limited, and a reaction apparatus for use in a general reaction of a high-viscosity fluid is preferably used. Examples of such a reaction apparatus include mixing apparatuses commonly used in resin kneading, for example, a stirring tank-type polymerization reaction apparatus having a stirring apparatus provided with a stirring blade having any shape such as an anchor, multiple-stage, spiral band or spiral shaft shape, or a modified shape thereof, or a kneader, a roll mill or a banbury mixer.

### (Filler (B))

Examples of the filler (B) for use in the resin composition of the present invention include silica, mica, and talc. One kind of the filler (B) may be used singly, or two or more kinds thereof may be used in combination. The filler (B) can be compounded with the liquid crystal polyester resin (A) to thereby provide a resin molded article excellent in mechanical strength such as toughness without any loss of dielectric characteristics of the liquid crystal polyester resin (A).

A conventionally known silica can be used as the silica. The shape of the silica is not particularly limited, and may be any of spherical, plate, and flakey shapes. The silica may be any of amorphous silica and crystalline silica, or may be a mixture thereof. A commercially available product can also be used as the silica, and examples thereof include trade name SC2500-SPJ (spherical silica) manufactured by Admatechs, trade name KSE625 (spherical silica), and trade name KSE2045 (spherical silica), trade name FHD05 (molten silica) and trade name FCS12 (molten silica) manufactured by KINSEI MATEC CO., LTD.

A conventionally known mica can be used as the mica. The mica may be any of a mica powder wet pulverized and a mica powder dry pulverized, or may be a mixture thereof. The mica may be a natural product or a synthetic product. A commercially available product can also be used as the mica, and examples thereof include trade name AB-25S (white mica (wet)), trade name A-21S (white mica (wet)), trade name Y-1800 (white mica (wet)) and trade name S-30 (white mica (dry)) manufactured by YAMAGUCHI MICA CO., LTD., trade name S-325 (gold mica (dry)) manufactured by Repco Inc., and trade name MK-300 (synthetic mica) manufactured by Katakura & Co-op Agri Corporation.

A conventionally known talc can be used as the talc. A commercially available product can also be used as the talc, and examples thereof include MS-KY manufactured by Nippon Talc Co., Ltd.

A fiber filling agent may also be included in addition to the above, in the filler (B). The fiber filling agent can be selected from an inorganic fibrous material and an organic fibrous material. Examples of the inorganic fibrous material include carbon fiber, silicon carbide fiber, ceramic fiber, glass fiber, asbestos fiber, alumina fiber, zirconia fiber, boron nitride fiber, silicon nitride fiber, boron fiber, wollastonite, whisker, potassium titanate fiber and metal fiber, and carbon fiber, silicon carbide fiber, ceramic fiber, glass fiber, wollastonite, whisker, and metal fiber are preferable, and carbon fiber and glass fiber are more preferable. Examples of the organic fibrous material include a high-melting point organic fibrous material such as aramid fiber. The fiber filling agent may be in the form of nanofiber.

The lower limit value of the amount of compounding of the liquid crystal polyester resin (A) based on 100 parts by mass in total of the liquid crystal polyester resin (A) and the filler (B) in the resin composition according to the present invention is preferably 50 parts by mass or more, more preferably 55 parts by mass or more, further preferably 60 parts by mass or more, still more preferably 65 parts by mass or more, and the upper limit value thereof is preferably 99 parts by mass or more, more preferably 95 parts by mass or more, further preferably 90 parts by mass or more. The lower limit value of the amount of compounding of the filler (B) based on 100 parts by mass in total of the liquid crystal polyester resin (A) and the filler (B) is preferably 1 part by mass or more, more preferably 5 parts by mass or more, further preferably 10 parts by mass or more, and the upper limit value thereof is preferably 50 parts by mass or more, more preferably 45 parts by mass or more, further preferably 40 parts by mass or more, still more preferably 35 parts by mass or more. When the compounding ratio of the liquid crystal polyester resin (A) and the filler (B) is approximately in the numerical range, a resin molded article low in dielectric tangent and excellent in mechanical strength such as toughness is obtained. Furthermore, a resin composition more excellent in melt molding processability and heat resistance can be obtained.

### (Other additive)

The resin composition according to the present invention may include other additive such as a colorant, a dispersant, a plasticizer, an antioxidant, a curing agent, a flame retardant, a heat stabilizer, an ultraviolet absorber, an antistatic agent, and/or a surfactant without departing from the gist of the present invention.

### (Resin molded article)

The resin molded article according to the present invention is made of the resin composition. The resin molded article according to the present invention is low in dielectric tangent and excellent in mechanical strength such as toughness. Furthermore, the resin molded article is preferably excellent in heat resistance. The shape of the resin molded article according to the present invention is not particularly limited, and may be, for example, any of a plate shape, a film shape, and a fibrous shape.

### (Method for producing resin molded article)

In the present invention, the resin molded article can be obtained by molding the resin composition, which includes the liquid crystal polyester resin (A) and the filler (B), and optionally other additive and the like, by a conventionally known method. The resin composition can be obtained by melt kneading the total liquid crystal polyester resin (A) and filler (B), and the like by use of a banbury mixer, a kneader, a one- or two-axis extruder, or the like.

The molding method of the resin molded article is not particularly limited, and examples thereof include press molding, foam molding, injection molding, extrusion molding, and punch molding. The molded article produced as described above can be processed into any shape depending on the intended use.

Specifically, the resin molded article, which has a film shape, can be obtained by a conventionally known method, for example, inflation molding, extrusion molding such as melt extrusion molding, and a solution casting method. Such a film thus obtained may be a monolayer film made of only the resin composition of the present invention, or may be a multilayer film with a different material.

A film obtained by extrusion molding or solution casting molding may be subjected to one-axis or two-axis stretching treatment in order to improve dimension stability and mechanical properties. Heat treatment may also be performed for the purpose of removal of anisotropy of the film or an enhancement in heat resistance of the film.

A fibrous resin molded article can be obtained by a conventionally known method, for example, a melt spinning method or a solution spinning method. The fiber may be made of only the resin composition of the present invention, or may be a mixture with other resin.

### (Electrical/electronic component)

The electrical/electronic component according to the present invention includes the resin composition. Examples of the electrical/electronic component include an antenna, a connector for highspeed transmission, a CPU socket, a circuit board, a flexible printed board (FPC), a circuit board for stacking, millimeter wave radar and quasi millimeter wave radar such as radar for collision prevention, an RFID tag, a capacitor, an inverter component, an insulation film, a covering material for cables, an insulation material for secondary batteries such as lithium ion batteries, and a speaker vibration plate, for use in electronic devices and communication devices such as ETC, GPS, wireless LAN and mobile phones.

### EXAMPLES

Hereinafter, the present invention is more specifically described with reference to Examples, but the present invention is not limited to these Examples.

### <Production of liquid crystal polyester resin (A)>

### (Synthesis Example 1)

Fifty % by mol of 6-hydroxy-2-naphthoic acid (HNA), 25% by mol of 4,4'-dihydroxybiphenyl (BP), 17% by mol of terephthalic acid (TPA), and 8% by mol of 2,6-naphthalenedicarboxylic acid (NADA) were added to a polymerization vessel having a stirring blade, potassium acetate and magnesium acetate as catalysts were loaded thereinto, depressurization of the polymerization vessel and nitrogen injection thereinto were performed three times for purging with nitrogen, thereafter acetic anhydride (1.08 molar equivalents relative to a hydroxyl group) was further added, and the resultant was heated to 150°C and subjected to an acetylation reaction in a reflux state for 2 hours.

After completion of the acetylation, the polymerization vessel in the state where acetic acid was distilled out was heated at 0.5°C/min, a polymerized product was extracted after the temperature of a melt in this tank reached 310°C, and the polymerized product was cooled and solidified. The polymerized product obtained was pulverized to a size so as to pass through a sieve having an aperture of 2.0 mm, and thus a prepolymer was obtained.

Next, the prepolymer obtained was heated in an oven manufactured by Yamato Scientific co., ltd., from room temperature to 300°C over 14 hours, thereafter the temperature was retained at 300°C for 2 hours, to thereby perform solid phase polymerization. Thereafter, heat was released naturally at room temperature, and thus a liquid crystal polyester resin A1 was obtained. The liquid crystal polyester resin sample was heated and molten on a microscope heating stage and was then confirmed based on the presence of optical anisotropy to exhibit liquid crystallinity, by use of a polarization microscope (trade name: BH-2) manufactured by OLYMPUS CORPORATION, equipped with a hot stage for microscopes (trade name: FP82HT) manufactured by METTLER TOLEDO.

### (Synthesis Example 2)

A liquid crystal polyester resin A2 was obtained in the same manner as in Synthesis Example 1 except that monomer charging was changed to 55% by mol of HNA, 22.5% by mol of BP, 16.5% by mol of TPA, and 6% by mol of NADA. Subsequently, the liquid crystal polyester resin A2 obtained was confirmed to exhibit liquid crystallinity in the same manner as described above.

### (Synthesis Example 3)

A liquid crystal polyester resin A3 was obtained in the same manner as in Synthesis Example 1 except that monomer charging was changed to 60% by mol of HNA, 20% by mol of BP, 15.5% by mol of TPA, and 4.5% by mol of NADA. Subsequently, the liquid crystal polyester resin A3 obtained was confirmed to exhibit liquid crystallinity in the same manner as described above.

### (Synthesis Example 4)

A liquid crystal polyester resin A4 was obtained in the same manner as in Synthesis Example 1 except that monomer charging was changed to 65% by mol of HNA, 17.5% by mol of BP, 15.5% by mol of TPA, and 2% by mol of NADA. Subsequently, the liquid crystal polyester resin A4 obtained was confirmed to exhibit liquid crystallinity in the same manner as described above.

### (Synthesis Example 5)

A liquid crystal polyester resin A5 was obtained in the same manner as in Synthesis Example 1 except that monomer charging was changed to 70% by mol of HNA, 15% by mol of BP, 6% by mol of TPA, and 9% by mol of NADA. Subsequently, the liquid crystal polyester resin A5 obtained was confirmed to exhibit liquid crystallinity in the same manner as described above.

### <Performance evaluation>

The structural units (composition of each monomer) of the liquid crystal polyester resins A1 to A5 obtained was shown in Table 1. Hereinafter, the liquid crystal polyester resins A1 to A5 obtained were subjected to performance evaluation.

### (Measurement of melting point)

The melting point of each of the liquid crystal polyester resins A1 to A5 obtained was measured with a differential scanning calorimeter (DSC) manufactured by Hitachi High-Tech Science Corporation, according to the testing method of ISO11357, ASTM D3418. Herein, an endothermic peak top obtained in complete melting of the polymer by temperature rise from room temperature to 360 to 380°C at a rate of temperature rise of 10°C/min, then temperature dropping to 30°C at a rate of 10°C/min and furthermore temperature rise to 380°C at 10°C/min was defined as the melting point (Tm₂). The measurement results were shown in Table 1.

### (Measurement of dielectric tangent (10 GHz))

Each of the liquid crystal polyester resins A1 to A5 obtained was used, and heated and molten under a condition of from each melting point to the melting point + 30°C, and injection molded by use of a mold of 60 mm × 60 mm × 0.8 mm (thickness), to thereby produce each flat plate-shaped test piece. Subsequently, such each flat plate-shaped test piece produced was cut to a size of 60 mm × 3 mm (width), and the relative permittivity and the dielectric tangent in the flow direction at a frequency of 10 GHz were measured with a Network analyzer MS46122B manufactured by Anritsu and a resonator manufactured by AET, Inc., according to a cavity resonator perturbation method. The respective dielectric tangents in the TD direction and the MD direction of such each test piece were measured, and the average value thereof was shown in Table 1.

### (Measurement of melt viscosity)

The melt viscosity (Pa·s) of each of the liquid crystal polyester resins A1 to A5 obtained, at each melting point + 20°C at a shear speed of 1000 S⁻¹, was measured with a capillary rheometer viscometer (Capilograph 1D manufactured by Toyo Seiki Seisaku-sho, Ltd.) and a capillary having an inner diameter of 1 mm, according to JIS K7199. The measurement results were shown in Table 1. Herein, each resin composition was dried under reduced pressure at 150°C for 4 hours.

**[Table 1]**

| Table 1 | Liquid crystal polyester resin (A) | Composition (% by mol) | | | | Performance evaluation | | |
|---|---|---|---|---|---|---|---|---|
| | | Structural unit (I) | Structural unit (II) | Structural unit (III) | | Melting point (°C) | Dielectric tangent tanδ (× 10⁻³) | Melt viscosity (Pa·s) |
| | | HNA | BP | TPA | NADA | | | |
| Synthesis Example 1 | A1 | 50 | 25 | 17 | 8 | 311 | 0.7 | 53 |
| Synthesis Example 2 | A2 | 55 | 22.5 | 16.5 | 6 | 317 | 0.6 | 53 |
| Synthesis Example 3 | A3 | 60 | 20 | 15.5 | 4.5 | 320 | 0.7 | 40 |
| Synthesis Example 4 | A4 | 65 | 17.5 | 15.5 | 2 | 338 | 0.7 | 32 |
| Synthesis Example 5 | A5 | 70 | 15 | 6 | 9 | 320 | 0.5 | 85 |

### <Preparation of filler (B)>

The following resins were prepared for the filler (B).
· Silica 1: spherical silica, manufactured by Admatechs, trade name SC2500-SPJ
· Silica 2: spherical silica, manufactured by KINSEI MATEC CO., LTD., trade name KSE625
· Silica 3: spherical silica, manufactured by KINSEI MATEC CO., LTD., trade name KSE2045
· Silica 4: molten silica, manufactured by KINSEI MATEC CO., LTD., trade name FHD05
· Silica 5: molten silica, manufactured by KINSEI MATEC CO., LTD., trade name FCS12
· Mica 1: white mica (wet), manufactured by YAMAGUCHI MICA CO., LTD., trade name AB-25S
· Mica 2: white mica (wet), manufactured by YAMAGUCHI MICA CO., LTD., trade name A-21S
· Mica 3: white mica (wet), manufactured by YAMAGUCHI MICA CO., LTD., trade name Y-1800
· Mica 4: white mica (dry), manufactured by YAMAGUCHI MICA CO., LTD., trade name S-30
· Mica 5: white mica (dry), manufactured by Repco Inc., trade name M-325
· Mica 6: gold mica (dry), manufactured by Repco Inc., trade name S-325
· Mica 7: synthetic mica, manufactured by manufactured by Katakura & Co-op Agri Corporation, trade name MK-300
· Talc 1: trade name MS-KY manufactured by Nippon Talc Co., Ltd.

### <Preparation of other additive>

The following additives were prepared for other additive.
· Polytetrafluoroethylene resin (PTFE): trade name KT-400M manufactured by KITAMURA LIMITED
· Hollow glass (GB): trade name S-60HS manufactured by 3M
· Glass fiber (CGF): trade name T-786H manufactured by Nippon Electric Glass Co., Ltd.

### [Test Example 1]

The following test was performed in order to confirm that a resin composition where silica, mica, or talc was compounded to the liquid crystal polyester resin provided a resin molded article low in dielectric tangent and excellent in mechanical strength performance such as toughness, as compared with a resin composition where other additive was compounded to the liquid crystal polyester resin.

### <Production of resin composition>

### (Example 1)

A pellet-shaped resin composition was obtained by dry blending 90 parts by mass of the liquid crystal polyester resin A3 obtained and 10 parts by mass of the silica 1, then kneading them at a temperature of Tm₂ + 20°C to 50°C of the liquid crystal polyester resin A, by a two-axis kneading machine (PCM 30 manufactured by Ikegai Corp.), and forming a pellet by strand cutting.

### (Example 2)

A pellet-shaped resin composition was obtained in the same manner as in Example 1 except that 75 parts by mass of the liquid crystal polyester resin A3 obtained and 25 parts by mass of the mica 1 were dry blended.

### (Example 3)

A pellet-shaped resin composition was obtained in the same manner as in Example 1 except that 80 parts by mass of the liquid crystal polyester resin A3 obtained and 20 parts by mass of the talc 1 were dry blended.

### (Comparative Example 1)

A pellet-shaped resin composition was obtained in the same manner as in Example 1 except that 90 parts by mass of the liquid crystal polyester resin A3 obtained and 10 parts by mass of the PTFE were dry blended.

### (Comparative Example 2)

A pellet-shaped resin composition was obtained in the same manner as in Example 1 except that 95 parts by mass of the liquid crystal polyester resin A3 obtained and 5 parts by mass of the GB were dry blended.

### (Comparative Example 3)

A pellet-shaped resin composition was obtained in the same manner as in Example 1 except that 85 parts by mass of the liquid crystal polyester resin A3 obtained and 15 parts by mass of the GB were dry blended.

### (Comparative Example 4)

A pellet-shaped resin composition was obtained in the same manner as in Example 1 except that 90 parts by mass of the liquid crystal polyester resin A3 obtained and 10 parts by mass of the CGF were dry blended.

### <Performance evaluation>

The composition of each of the resin compositions obtained was shown in Table 2. Hereinafter, each of the resin compositions obtained was subjected to performance evaluation.

### (Measurement of dielectric tangent-relative permittivity (10 GHz))

Each of the resin compositions obtained was heated and molten under a condition of from the melting point of the liquid crystal polyester A3 + 20°C to the melting point + 30°C and injection molded with an injection molding machine by use of a mold of 60 mm × 60 mm × 0.8 mm (thickness), to thereby produce each flat plate-shaped test piece. Subsequently, such each flat plate-shaped test piece produced was cut to a size of 60 mm × 3 mm (width), and the dielectric tangent and the relative permittivity in the flow direction at a frequency of 10 GHz were measured with a Network analyzer MS46122B manufactured by Anritsu and a resonator manufactured by AET, Inc., according to a cavity resonator perturbation method. The respective dielectric tangents and the respective relative permittivities in the TD direction and the MD direction of such each test piece were measured, and the average values thereof were shown in Table 2.

### (Measurement of Izod impact strength)

Each of the resin compositions obtained was injection molded with an injection molding machine (SE30DUZ manufactured by Sumitomo Heavy Industries, Ltd.) at a cylinder maximum temperature of 340°C and a mold temperature of 80°C, to thereby produce a bending test piece according to ASTM D790. Subsequently, the test piece produced, for a bending test, was used to measure the Izod impact strength (kJ/m²) according to ASTM D256. It is indicated that, as the numerical value of the Izod impact strength is higher, the resin molded article is more excellent in toughness.

### (Measurement of tensile strength and tensile modulus)

Each of the resin compositions obtained was injection molded with an injection molding machine (SE30DUZ manufactured by Sumitomo Heavy Industries, Ltd.) at a cylinder maximum temperature of 340°C and a mold temperature of 80°C, to thereby produce a tensile test piece according to ASTM D638. Subsequently, the tensile test piece produced was used to measure the tensile strength (MPa) and the tensile modulus (MPa) according to ASTM D638.

**[Table 2]**

| | Composition | | | | | | | Performance evaluation | | | | |
|---|---|---|---|---|---|---|---|---|---|---|---|---|
| | Liquid crystal polyester resin (A) | | Filler (B) | | Other additive | | Total (parts by mass) | Dielectric tangent tanδ (× 10⁻³) | Relative permittivity Er | Izod impact strength (kJ/m²) | Tensile strength (MPa) | Tensile modulus (MPa) |
| | Type | Amount of compounding | Type | Amount of compounding | Type | Amount of compounding | | | | | | |
| Example 1 | A3 | 90 | Silica 1 | 10 | - | - | 100 | 0.9 | 3.30 | 46 | 145 | 7200 |
| Example 2 | A3 | 75 | Mica 1 | 25 | - | - | 100 | 0.8 | 3.64 | 50 | 149 | 7700 |
| Example 3 | A3 | 80 | Talc 1 | 20 | - | - | 100 | 0.9 | 3.52 | | | |
| Comparative Example 1 | A3 | 90 | - | - | PTFE | 10 | 100 | 0.9 | 3.16 | 32 | 136 | 6100 |
| Comparative Example 2 | A3 | 95 | - | - | GB | 5 | 100 | 1.4 | 3.14 | 35 | 144 | 6000 |
| Comparative Example 3 | A3 | 85 | - | - | GB | 15 | 100 | 2.1 | 2.86 | 22 | 102 | 5900 |
| Comparative Example 4 | A3 | 90 | - | - | CGF | 10 | 100 | 1.6 | 3.44 | 23 | 156 | 8600 |

### [Test Example 2]

The following test was performed in order to confirm that a resin molded article low in dielectric tangent and excellent in mechanical strength performance such as toughness was obtained even if the types of silica and mica to be compounded to the liquid crystal polyester resin were changed.

### <Production of resin composition>

### (Example 4)

A pellet-shaped resin composition was obtained in the same manner as in Example 1 except that 90 parts by mass of the liquid crystal polyester resin A3 obtained and 10 parts by mass of the silica 2 were dry blended.

### (Example 5)

A pellet-shaped resin composition was obtained in the same manner as in Example 1 except that 90 parts by mass of the liquid crystal polyester resin A3 obtained and 10 parts by mass of the silica 3 were dry blended.

### (Example 6)

A pellet-shaped resin composition was obtained in the same manner as in Example 1 except that 90 parts by mass of the liquid crystal polyester resin A3 obtained and 10 parts by mass of the silica 4 were dry blended.

### (Example 7)

A pellet-shaped resin composition was obtained in the same manner as in Example 1 except that 90 parts by mass of the liquid crystal polyester resin A3 obtained and 10 parts by mass of the silica 5 were dry blended.

### (Example 8)

A pellet-shaped resin composition was obtained in the same manner as in Example 1 except that 90 parts by mass of the liquid crystal polyester resin A3 obtained and 10 parts by mass of the mica 2 were dry blended.

### (Example 9)

A pellet-shaped resin composition was obtained in the same manner as in Example 1 except that 90 parts by mass of the liquid crystal polyester resin A3 obtained and 10 parts by mass of the mica 3 were dry blended.

### (Example 10)

A pellet-shaped resin composition was obtained in the same manner as in Example 1 except that 90 parts by mass of the liquid crystal polyester resin A3 obtained and 10 parts by mass of the mica 4 were dry blended.

### (Example 11)

A pellet-shaped resin composition was obtained in the same manner as in Example 1 except that 90 parts by mass of the liquid crystal polyester resin A3 obtained and 10 parts by mass of the mica 5 were dry blended.

### (Example 12)

A pellet-shaped resin composition was obtained in the same manner as in Example 1 except that 90 parts by mass of the liquid crystal polyester resin A3 obtained and 10 parts by mass of the mica 6 were dry blended.

### (Example 13)

A pellet-shaped resin composition was obtained in the same manner as in Example 1 except that 90 parts by mass of the liquid crystal polyester resin A3 obtained and 10 parts by mass of the mica 7 were dry blended.

### <Performance evaluation>

The composition of each of the resin compositions obtained was shown in Table 3. Hereinafter, each of the resin compositions obtained was subjected to performance evaluation in the same manner as in [Test Example 1].

**[Table 3]**

| | Composition | | | | | | | Performance evaluation | | | | |
|---|---|---|---|---|---|---|---|---|---|---|---|---|
| | Liquid crystal polyester resin (A) | | Filler (B) | | Other additive | | Total (parts by mass) | Dielectric tangent tanδ (× 10⁻³) | Relative permittivity Er | Izod impact strength (kJ/m²) | Tensile strength (MPa) | Tensile modulus (MPa) |
| | Type | Amount of compounding | Type | Amount of compounding | Type | Amount of compounding | | | | | | |
| Example 4 | A3 | 90 | Silica 2 | 10 | - | - | 100 | 0.9 | 3.31 | 46 | 136 | 7000 |
| Example 5 | A3 | 90 | Silica 3 | 10 | - | - | 100 | 0.9 | 3.31 | 46 | 142 | 7100 |
| Example 6 | A3 | 90 | Silica 4 | 10 | - | - | 100 | 1.0 | 3.33 | 41 | 143 | 6900 |
| Example 7 | A3 | 90 | Silica 5 | 10 | - | - | 100 | 0.9 | 3.32 | 39 | 137 | 7500 |
| Example 8 | A3 | 90 | Mica 2 | 10 | - | - | 100 | 0.9 | 3.37 | 40 | 164 | 8000 |
| Example 9 | A3 | 90 | Mica 3 | 10 | - | - | 100 | 0.9 | 3.41 | 48 | 164 | 8000 |
| Example 10 | A3 | 90 | Mica 4 | 10 | - | - | 100 | 0.9 | 3.38 | | | |
| Example 11 | A3 | 90 | Mica 5 | 10 | - | - | 100 | 0.9 | 3.38 | | | |
| Example 12 | A3 | 90 | Mica 6 | 10 | - | - | 100 | 1.0 | 3.39 | | | |
| Example 13 | A3 | 90 | Mica 7 | 10 | - | - | 100 | 0.9 | 3.37 | | | |

### [Test Example 3]

The following test was performed in order to confirm that a resin molded article low in dielectric tangent and excellent in mechanical strength performance such as toughness was obtained even if the concentrations of silica and mica to be compounded to the liquid crystal polyester resin were changed.

### <Production of resin composition>

### (Example 14)

A pellet-shaped resin composition was obtained in the same manner as in Example 1 except that 70 parts by mass of the liquid crystal polyester resin A3 obtained and 30 parts by mass of the mica 1 were dry blended.

### (Example 15)

A pellet-shaped resin composition was obtained in the same manner as in Example 1 except that 75 parts by mass of the liquid crystal polyester resin A3 obtained and 25 parts by mass of the mica 1 were dry blended.

### (Example 16)

A pellet-shaped resin composition was obtained in the same manner as in Example 1 except that 80 parts by mass of the liquid crystal polyester resin A3 obtained and 20 parts by mass of the mica 1 were dry blended.

### (Example 17)

A pellet-shaped resin composition was obtained in the same manner as in Example 1 except that 80 parts by mass of the liquid crystal polyester resin A3 obtained and 20 parts by mass of the silica 4 were dry blended.

### <Performance evaluation>

The composition of each of the resin compositions obtained was shown in Table 4. Hereinafter, each of the resin compositions obtained was subjected to performance evaluation in the same manner as in [Test Example 1].

**[Table 4]**

| | Composition | | | | | | | Performance evaluation | | | | |
|---|---|---|---|---|---|---|---|---|---|---|---|---|
| | Liquid crystal polyester resin (A) | | Filler (B) | | Other additive | | Total (parts by mass) | Dielectric tangent tanδ (× 10⁻³) | Relative permittivity Er | Izod impact strength (kJ/m²) | Tensile strength (MPa) | Tensile modulus (MPa) |
| | Type | Amount of compounding | Type | Amount of compounding | Type | Amount of compounding | | | | | | |
| Example 14 | A3 | 70 | Mica 1 | 30 | - | - | 100 | 0.9 | 3.67 | | | |
| Example 15 | A3 | 75 | Mica 1 | 25 | - | - | 100 | 0.8 | 3.53 | 44 | 157 | 9400 |
| Example 16 | A3 | 80 | Mica 1 | 20 | - | - | 100 | 0.9 | 3.64 | | | |
| Example 17 | A3 | 80 | Silica 4 | 20 | - | - | 100 | 1.0 | 3.33 | | | |

## Claims

1. A resin composition comprising a liquid crystal polyester resin (A) and a filler (B), wherein
the liquid crystal polyester resin (A) contains a structural unit (I) derived from 6-hydroxy-2-naphthoic acid, a structural unit (II) derived from an aromatic diol compound, and a structural unit (III) derived from an aromatic dicarboxylic acid compound, and the structural unit (III) contains a structural unit (IIIA) derived from terephthalic acid and/or a structural unit (IIIB) derived from 2,6-naphthalenedicarboxylic acid,
a compositional ratio (% by mol) of the structural units satisfies the following conditions:
40% by mol ≤ structural unit (I) ≤ 75% by mol
12% by mol ≤ structural unit (II) ≤ 30% by mol
12% by mol ≤ structural unit (III) ≤ 30% by mol,
the filler (B) is at least one selected from the group consisting of silica, mica, and talc, and
the resin composition has a dielectric tangent of 1.0 × 10⁻³ or less as measured by a cavity resonator perturbation method at a measurement frequency of 10 GHz.

2. The resin composition according to claim 1, wherein an amount of compounding of the liquid crystal polyester resin (A) and an amount of compounding of the filler (B) are respectively 50 parts by mass or more and 99 parts by mass or more and 1 part by mass or more and 50 parts by mass or more based on 100 parts by mass in total of the liquid crystal polyester resin (A) and the filler (B).

3. The resin composition according to claim 1 or 2, wherein the liquid crystal polyester resin (A) has a melting point of 300°C or more.

4. The resin composition according to any one of claims 1 to 3, wherein the liquid crystal polyester resin (A) has a melt viscosity of 5 Pa·s or more and 120 Pa·s or less at its melting point + 20°C and a shear speed of 1000 s⁻¹.

5. The resin composition according to any one of claims 1 to 4, wherein the structural unit (II) is preferably represented by the following formula: 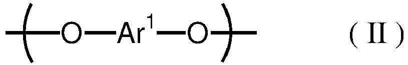 wherein Ar¹ is selected from the group consisting of phenyl, biphenyl, naphthyl, anthryl and phenanthryl each optionally having a substituent.

6. The resin composition according to any one of claims 1 to 5, wherein the structural unit (III) contains a structural unit (IIIA) derived from terephthalic acid and contains a structural unit (IIIB) derived from 2,6-naphthalenedicarboxylic acid, and the compositional ratio of the structural unit (IIIA) and the structural unit (IIIB) satisfies the following conditions:
3% by mol ≤ structural unit (IIIA) ≤ 28% by mol
2% by mol ≤ structural unit (IIIB) ≤ 9% by mol.

7. A resin molded article comprising the resin composition according to any one of claims 1 to 6.

8. The resin molded article according to claim 7, wherein the resin molded article has a film shape.

9. The resin molded article according to claim 7, wherein the resin molded article is fibrous.

10. The resin molded article according to claim 7, wherein the resin molded article is an injection molded article.

11. An electrical/electronic component comprising the resin molded article according to any one of claims 1 to 10.
